# FASCICULE DE BREVET EUROPEEN

(11) **EP 1 523 233 B1**
(45) Date de publication et mention de la délivrance du brevet: **08.03.2006**
(21) Numéro de dépôt: 03763925.9
(22) Date de dépôt: 01.07.2003
(51) Int. Cl.: A01D 78/12

(54) **MACHINE DE FENAISON**
HEUMASCHINE
HAY-MAKING MACHINE

(30) Priorité: 15.07.2002 FR 0208956
(43) Date de publication de la demande: 20.04.2005
(73) Titulaire: KUHN S.A., 67706 Saverne Cedex (FR)
(72) Inventeur: BERNE, Stephane, F-67700 Saverne (FR)
(74) Mandataire: Andres, Jean-Claude
(86) Numéro de dépôt international: PCT/FR2003/002047
(87) Numéro de publication internationale: WO 2004/006649

(56) Documents cités:
- EP-A- 0 590 311
- EP-A- 0 765 596
- FR-A- 2 392 591
- US-A- 4 922 700
- US-A- 5 791 133

## Description

La présente invention se rapporte à un andaineur de végétaux coupés, comportant un bâti avec au moins un rotor de râtelage ayant un axe support sensiblement vertical sur lequel est monté un carter pouvant être entraîné en rotation durant le travail et portant des bras porte-outils qui sont orientés vers la direction opposée au sens de rotation et lesquels bras porte-outils sont montés pivotants dans des paliers et sont commandés par une came qui si situe dans le carter, le carter comportant un disque supérieur et un disque inférieur.

Sur certaines machines connues de ce genre, le ou les rotors tournent dans le sens des aiguilles d'une montre et forment un andain sur le côté droit des machines vues dans le sens d'avancement. Sur d'autres machines, le ou les rotors tournent dans le sens opposé à celui des aiguilles d'une montre et forment un andain sur le côté gauche. Enfin, sur encore d'autres machines avec deux rotors de râtelage, ceux-ci peuvent tourner en sens inverses pour former un andain central commun aux deux rotors.

Sur ces machines, les carters des rotors sont conçus pour tourner soit dans le sens des aiguilles d'une montre soit dans le sens inverse, en raison de l'orientation des bras porte-outils. De ce fait, chaque type de carter se compose essentiellement de pièces spécifiques, ce qui augmente leur prix de revient.

La majeure partie de ces pièces ne peut pas non plus être utilisée pour la réalisation de carters ayant un nombre de bras porte-outils qui diffère. En pratique, la taille du carter et le nombre de bras porte-outils varient selon la largeur de travail du rotor. Il est ainsi également nécessaire de produire des pièces différentes en fonction de la taille et le nombre de bras à monter sur les carters.

Un andaineur comportant les caractéristiques du préambule de la revendication 1 est connu par le document US-A- 4922700.

La présente invention a pour but de remédier aux inconvénients précités des machines connues. Elle doit notamment permettre une standardisation d'un grand nombre de pièces qui composent les carters des rotors.

A cet effet, une importante caractéristique de l'invention consiste en ce que le carter est constitué par une couronne présentant un bord extérieur sensiblement vertical portant des paliers de guidage des bras porte-outils, ainsi qu'un bord supérieur et un bord inférieur qui sont dirigés vers l'axe support du rotor et qui sont sensiblement identiques l'un à l'autre et, en ce que le disque supérieur et le disque inférieur sont fixés sur lesdits bords supérieur et inférieur de manière démontable.

Grâce aux deux bords supérieur et inférieur qui sont identiques, il est possible d'inverser la position de la couronne et de la fixer aux disques supérieur et inférieur dans chaque position. Dans une de ces positions le carter peut tourner dans le sens des aiguilles d'une montre tandis que l'autre position il peut tourner dans le sens contraire. Cet agencement rend possible d'utiliser des pièces identiques pour des carters qui tournent dans des sens opposés ce qui permet de réduire les coûts de fabrication et de gestion de ces pièces.

Pour la réalisation de carters avec des nombres de bras porte-outils différents, il suffit de remplacer la couronne. Les disques supérieurs et inférieurs de ces carters de différentes tailles peuvent être pareils. Le nombre de pièces standards reste tout de même important.

D'autres caractéristiques et avantages de l'invention ressortiront des revendications et de la description ci-après d'un exemple de réalisation non limitatif de l'invention avec référence aux dessins annexés dans lesquels :
- la figure 1 représente une vue générale d'une machine selon l'invention,
- la figure 2 représente une vue en coupe d'un rotor,
- la figure 3 représente une vue de détail d'un rotor.

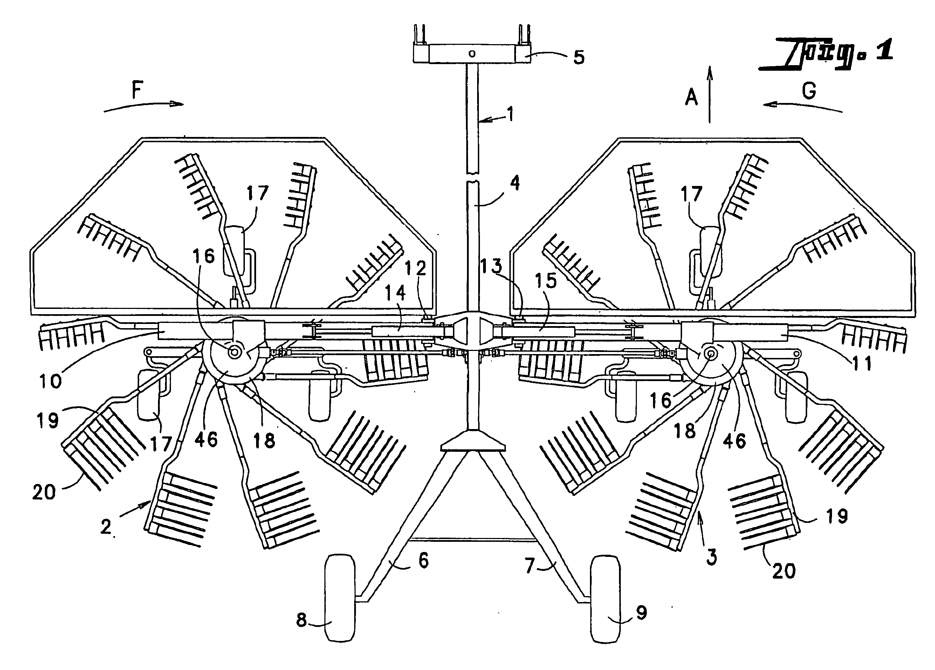

Telle qu'il est représenté sur la figure 1, l'andaineur selon l'invention comporte un bâti (1) qui porte deux rotors de râtelage (2 et 3). Le nombre de ces rotors est variable. Il peut y en avoir un seul, deux, trois ou quatre selon la largeur de travail recherchée. Le bâti (1) est notamment constitué par une poutre (4) qui est dirigée dans la direction d'avancement (A). Cette poutre (4) possède à son extrémité avant un dispositif d'accouplement (5) pour l'accrocher à un tracteur qui n'est pas représenté. A son extrémité arrière, elle possède deux supports (6 et 7) divergents, ayant chacun une roue porteuse (8 et 9) qui repose constamment sur le sol.

Sur chaque côté de cette poutre (4) est articulé un bras (10, 11) portant chacun un des rotors de râtelage (2, 3). L'articulation de ces bras (10 et 11) sur la poutre (4) est réalisée au moyen d'axes (12 et 13) dirigés dans la direction d'avancement (A). Des vérins hydrauliques (14 et 15) qui sont articulés sur la poutre (4) et sur les bras (10 et 11) permettent de les déplacer avec les rotors (2 et 3) autour des axes (12 et 13).

Les rotors de râtelage (2 et 3) sont destinés à tourner en sens inverses comme cela est indiqué par les flèches F et G sur la figure 1. Chaque rotor (2 et 3) possède un axe support central (16) sensiblement vertical qui est muni à son extrémité inférieure de roues porteuses (17). Sur cet axe support (16) est monté un carter (18) qui peut être entraîné en rotation durant le travail. Celui-ci porte des bras (19) avec des outils (20). Ces bras (19) sont montés pivotants dans des paliers (21) et sont orientés vers la direction opposée au sens de rotation (F et G) du rotor (2, 3) correspondant.

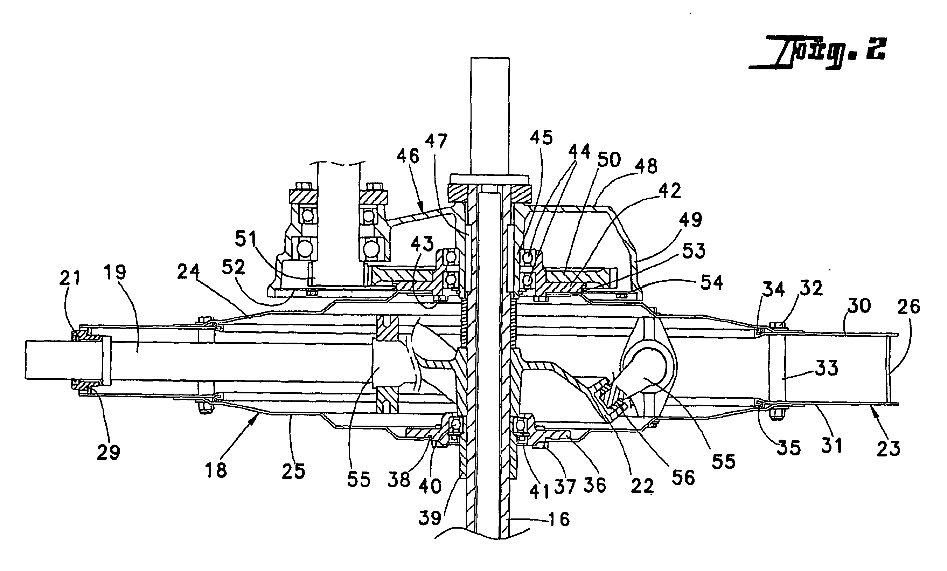

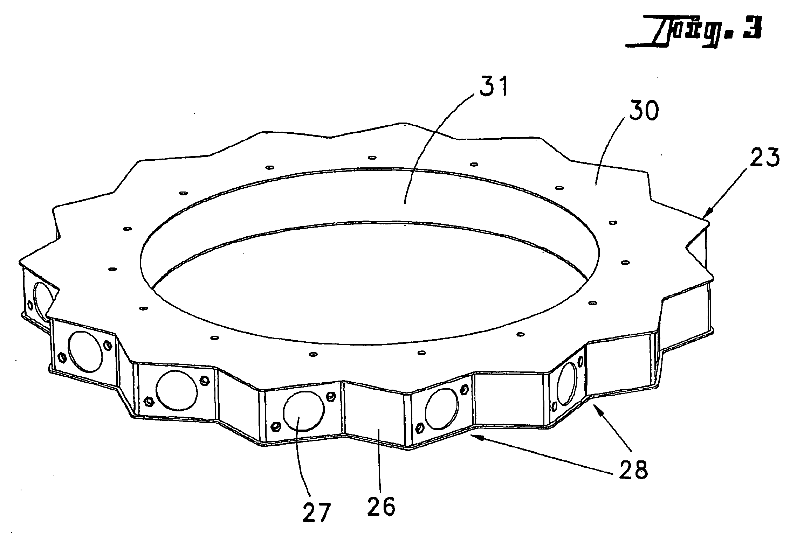

Comme cela ressort notamment de la figure 2, le carter (18) renferme une came de commande (22) qui est fixée sur l'axe support (16). Chaque bras porte-outils (19) comporte à son extrémité située dans le carter (18) un maneton (55) avec un galet (56) qui est guidé par la came (22). Ledit carter (18) est constitué par une couronne (23), un disque supérieur (24) et un disque inférieur (25). La couronne (23) comporte un bord extérieur (26) sensiblement vertical muni d'orifices (27) pour les paliers (21) et les bras porte-outils (19) (voir figure 3). Ce bord extérieur (26) présente des décrochements (28) permettant l'orientation des paliers (21) et des bras prote-outils (19) dans la direction opposée au sens de rotation (F ou G). Entre les paliers (21) et le bord extérieur (26) de la couronne (23) sont montés des joints toriques (29) pour assurer l'étanchéité du carter (18). La couronne (23) comporte en sus un bord supérieur (30) et un bord inférieur (31) qui sont dirigés vers l'axe support (16) et qui sont sensiblement identiques l'un à l'autre. De ce fait, la couronne (23) est réversible et peut être utilisée pour la réalisation de carters qui tournent dans le sens des aiguilles d'une montre et de carters qui tournent dans le sens opposé. Lesdits bords supérieur (30) et inférieur (31) peuvent être rendus solidaires du bord extérieur (26) par soudure.

Le disque supérieur (24) et le disque inférieur (25) sont de forme générale identique, ce qui facilite leur fabrication. Ils sont fixés sur les bords supérieur (30) et inférieur (31) de la couronne (23) de manière démontable à l'aide de boulons (32) traversant de part en part le carter (18). Lesdits boulons (32) passent dans des entretoises (33) situées entre les deux bords (30 et 31) de la couronne (23). Des joints d'étanchéité (34 et 35) sont montés, d'une part, entre le disque supérieur (24) et le bord supérieur (30) de la couronne (23) et, d'autre part, entre le disque inférieur (25) et le bord inférieur (31) de la couronne (23). Ces joints (34, 35) empêchent la pénétration de corps étrangers dans le carter (18) et permettent de conserver un lubrifiant à l'intérieur dudit carter (18).

Le disque inférieur (25) est fixé sur un moyeu (36) à l'aide de vis (37). Entre lui et ce moyeu (36) est avantageusement disposé un joint torique (38). Ledit moyeu (36) est monté libre en rotation sur une bague (39) solidaire de l'axe support (16) par l'intermédiaire d'un roulement à bille (40). Il pourrait cependant également être monté libre en rotation directement sur l'axe support (16).,Entre ledit moyeu (36) et la bague (39) est disposé un joint d'étanchéité (41).

Le disque supérieur (24) est fixé sur un moyeu (42) à l'aide de vis (43). Ce moyeu est monté au moyen de roulements à billes (44) sur une partie interne cylindrique (45) d'un boîtier (46) qui est fixé sur l'axe support (16) au moyen de clavettes (47). Ce boîtier (46) comporte une paroi supérieure (48) et une paroi extérieure (49) qui s'étend vers le bas jusqu'au voisinage du disque supérieur (24). Une roue dentée (50) qui se situe dans le boîtier (46) est également fixée au moyeu (42) et, par l'intermédiaire de celui-ci, au disque supérieur (24). Cette couronne (50) assure l'entraînement en rotation du carter (18). A cet effet, elle engrène avec un pignon (51) qui est lui-même entraîné, par exemple, à l'aide de renvois d'angles et d'arbres de transmission qui s'étendent jusqu'à la prise de force du tracteur ou à l'aide d'un moteur hydraulique.

Le côté du boîtier (46) qui est orienté vers le disque supérieur (24) est fermé au moyen d'un couvercle (52) fixé avec des vis sur la paroi extérieure (49). Des joints d'étanchéité (53 et 54) sont montés entre le couvercle (52) et le moyeu (42) ainsi qu'entre le couvercle (52) et la paroi extérieure (49). Ledit boîtier (46) peut ainsi contenir un lubrifiant et est protégé contre la pénétration de corps étrangers.

Durant le travail, la machine selon l'invention est attelée à un tracteur qui la déplace dans le sens de la flèche (A) (voir figure 1). Les bras (10 et 11) sont alors abaissés de sorte que les roues (17) situées sous les rotors (2 et 3) se déplacent sur le sol. Les carters (18) de ces rotors (2 et 3) sont entraînés en rotation dans le sens des flèches (F et G). Durant cette rotation, les bras prote-outils (19) de chaque rotor (2 et 3) sont commandés par la came (22) de telle sorte qu'ils pivotent dans les paliers (21). Leurs outils (20) sont alors dirigés vers le sol et râtellent les végétaux dans la partie avant de leur trajectoire. Ensuite, les bras (19) relèvent ces outils (20) qui déposent les végétaux sous la forme d'un andain sur la bande de terrain qui se situe entre les deux rotors (2 et 3).

La présence de lubrifiant dans le carter (18) et le boîtier (46) de chaque rotor (2 et 3) améliore leur fonctionnement et permet de réduire les opérations de maintenance.

Pour le transport, la rotation des rotors (2 et 3) est arrêtée. Ils sont alors relevés avec les bras (10 et 11) dans une position verticale afin de réduire l'encombrement de la machine.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection.

## Revendications

1. Andaineur de végétaux coupés, comportant un bâti avec au moins un rotor de râtelage ayant un axe support (16) sensiblement vertical sur lequel est monté un carter (18) pouvant être entraîné en rotation durant le travail et portant des bras porte-outils qui sont orientés vers la direction opposée au sens de rotation et lesquels bras porte-outils sont montés pivotants dans des paliers et sont commandés par une came qui se situe dans le carter (18), le carter (18) comportant un disque supérieur (24) et un disque inférieur (25) ***caractérisée par le fait* que** ledit carter (18) est constitué par une couronne (23) présentant un bord extérieur (26) sensiblement vertical portant des paliers de guidage (21) des bras porte-outils (19), ainsi qu'un bord supérieur (30) et un bord inférieur (31) qui sont dirigés vers l'axe support (16) et sont sensiblement identiques l'un à l'autre, ledit disque supérieur (24) et ledit disque inférieur (25) étant fixés sur lesdits bords supérieur (30) et inférieur (31) de manière démontable.

2. Machine selon la revendication 1, ***caractérisée par le fait* que** le bord supérieur (30) et le bord inférieur (31) de la couronne (23) sont soudés au bord extérieur (26).

3. Machine selon la revendication 1, ***caractérisée par le fait* que** le disque supérieur (24) et le disque inférieur (25) du carter (18) sont sensiblement identiques.

4. Machine selon l'une quelconque des revendications précédentes, ***caractérisée par le fait* que** des joints d'étanchéité (34 et 35) sont montés entre le disque supérieur (24), ainsi que entre le disque inférieur (25) et le bord (30 et 31) correspondant de la couronne (23).

5. Machine selon l'une quelconque des revendications précédentes, ***caractérisée par le fait* que** le disque supérieur (24) et le disque inférieur (25) sont fixés sur les bords supérieurs et inférieurs (30 et 31) de la couronne (23) au moyen de boulons (32) traversant de part en part le carter (18).

6. Machine selon la revendication 1, ***caractérisée par le fait* que** des paliers de guidage (21) des bras porte-outils (19) sont montés sur le bord extérieur (26) de la couronne (23) et que des joints toriques (29) sont montés entre lesdits paliers (21) et ledit bord (26).

7. Machine selon l'une quelconque des revendications **1, 3, 4 ou 5, *caractérisée par le fait* que** le disque inférieur (25) est fixé sur un moyeu (36) qui est monté sur l'axe support (16) ou une bague (39) solidaire dudit axe support au moyen d'un roulement à billes (40).

8. Machine selon la revendication 7, ***caractérisée par le fait* qu'**un joint d'étanchéité (41) est disposé entre le moyeu (36) et l'axe support (16) ou la bague (39) solidaire de celui-ci.

9. Machine selon l'une quelconque des revendications 1, 3, 4 ou 5, ***caractérisée par le fait* que** le disque supérieur (24) est fixé sur un moyeu (42) qui est monté au moyen d'au moins un roulement à billes (44) sur une partie interne cylindrique (45) d'un boîtier (46) qui est fixé sur l'axe support (16).

10. Machine selon la revendication 9, ***caractérisée par le fait* qu'**une roue dentée (50) pour l'entraînement en rotation du carter (18) est fixée au moyeu (42) et au disque supérieur (24).

11. Machine selon la revendication 9 ***caractérisée par le fait* que** le côté du boîtier (46) qui est orienté vers le disque supérieur (24) est fermé au moyen d'un couvercle (52).

## Patentansprüche

1. Schwadleger für gemähte Pflanzen mit einem Gestell mit mindestens einem Rechrotor mit einer im Wesentlichen vertikalen Stützachse (16), auf der ein Gehäuse (18) befestigt ist, das während der Arbeit in Drehung angetrieben werden kann und Werkzeugtragarme trägt, die zur Drehrichtung entgegen gesetzte Richtung ausgerichtet sind, wobei die Werkzeugtragarme schwenkbar in Lagern befestigt sind und von einer Nocke gesteuert werden, die sich im Gehäuse (18) befindet, wobei das Gehäuse (18) eine obere Scheibe (24) und eine untere Scheibe (25) umfasst, ***dadurch gekennzeichnet,* dass** das Gehäuse (18) von einem Kranz (23) gebildet ist, der einen im Wesentlichen vertikalen äußeren Rand (26), der die Führungslager (21) der Werkzeugtragarme (19) trägt, sowie einen oberen Rand (30) und einen unteren Rand (31) aufweist, die zur Stützachse (16) gerichtet und im Wesentlichen zueinander identisch sind, wobei die obere Scheibe (24) und die untere Scheibe (25) auf diesen oberen (30) und unteren Ränder (31) demontierbar befestigt sind.

2. Maschine nach Anspruch 1, ***dadurch gekennzeichnet,* dass** der obere Rand (30) und der untere Rand (31) des Kranzes (23) auf den äußeren Rand (26) geschweißt sind.

3. Maschine nach Anspruch 1, ***dadurch gekennzeichnet,* dass** die obere Scheibe (24) und die untere Scheibe (25) des Gehäuses (18) im Wesentlichen identisch sind.

4. Maschine nach irgend einem der vorhergehenden Ansprüche, ***dadurch gekennzeichnet,* dass** Dichtungen (34 und 35) zwischen der oberen Scheibe (24) sowie zwischen der unteren Scheibe (25) und dem entsprechenden Rand (30 und 31) des Kranzes (23) befestigt sind.

5. Maschine nach irgend einem der vorhergehenden Ansprüche, ***dadurch gekennzeichnet,* dass** die obere Scheibe (24) und die untere Scheibe (25) an den oberen und unteren Rändern (30 und 31) des Kranzes (23) mit Hilfe von Bolzen (32), die durch das Gehäuse (18) hindurchgehen, befestigt sind.

6. Maschine nach Anspruch 1, ***dadurch gekennzeichnet,* dass** Führungslager (21) der Werkzeugtragarme (19) am äußeren Rand (26) des Kranzes befestigt sind, und dass Ringdichtungen (29) zwischen diesen Lagern (21) und diesem Rand (26) befestigt sind.

7. Maschine nach irgend einem der Ansprüche 1, 3, 4 oder 5, ***dadurch gekennzeichnet,* dass** die untere Scheibe (25) auf einer Nabe (36) befestigt ist, die auf der Stützachse (16) oder einer Hülse (39), die fest mit der Stützachse verbunden ist, mittels eines Kugellagers (40) montiert ist.

8. Maschine nach Anspruch 7, ***dadurch gekennzeichnet,* dass** eine Dichtung (41) zwischen der Nabe (36) und der Stützachse (16) oder dem mit dieser fest verbundenen Hülse (39) angeordnet ist.

9. Maschine nach irgend einem der Ansprüche 1, 3, 4 oder 5, ***dadurch gekennzeichnet,* dass** die obere Scheibe (24) auf einer Nabe (42) befestigt ist, die mit Hilfe von mindestens einem Kugellager (44) auf einem inneren zylindrischen Teil (45) eines Kastens (46), der auf der Stützachse (16) befestigt ist, montiert ist.

10. Maschine nach Anspruch 9, ***dadurch gekennzeichnet,* dass** ein Zahnrad (50) für den Drehantrieb des Gehäuses (18) an der Nabe (42) und der oberen Scheibe (24) befestigt ist.

11. Maschine nach Anspruch 9, ***dadurch gekennzeichnet,* dass** die Seite des Kastens (46), die zu der oberen Scheibe (24) gerichtet ist, mit Hilfe eines Deckels (52) verschlossen ist.

## Claims

1. Windrower for cut plant matter comprising a frame with at least one raking wheel with a substantially vertical support axis (16) on which there is mounted a casing (18) that can be driven in rotation during work and carries tool-carrier arms directed to the opposite direction to the direction of rotation and which tool-carrier arms are mounted to pivot in bearings and are controlled by a cam located inside the casing (18), the casing (18) comprising an upper disc (24) and a lower disc (25), ***characterized in* that** the said casing (18) consists of an annulus (23) with a substantially vertical outer edge (26) carrying guide bearings (21) for the tool-carrier arms (19) and an upper edge (30) and a lower edge (31) which are directed towards the support axis (16) and are substantially identical to one another, the said upper disc (24) and the said lower disc (25) being removably fixed to the said upper (30) and lower (31) edges.

2. Machine according to Claim 1, ***characterized in* that** the upper edge (30) and the lower edge (31) of the annulus (23) are welded to the outer edge (26).

3. Machine according to Claim 1, ***characterized in* that** the upper disc (24) and the lower disc (25) of the casing (18) are substantially identical.

4. Machine according to any one of the preceding claims, ***characterized in* that** seals (34 and 35) are mounted between the upper disc (24) and between the lower disc (25) and the corresponding edge (30 and 31) of the annulus (23).

5. Machine according to any one of the preceding claims, ***characterized in* that** the upper disc (24) and the lower disc (25) are fixed to the upper and lower edges (30 and 31) of the annulus (23) by means of bolts (32) passing right through the casing (18).

6. Machine according to Claim 1, ***characterized in* that** guide bearings (21) for the tool-carrier arms (19) are mounted on the outer edge (26) of the annulus (23) and **in that** O-ring seals (29) are mounted between the said bearings (21) and the said edge (26).

7. Machine according to any one of Claims 1, 3, 4 or 5, ***characterized in* that** the lower disc (25) is fixed to a hub (36) which is mounted on the support axis (16) or a ring (39) secured to the said support axis by means of a ball bearing (40).

8. Machine according to Claim 7, ***characterized in* that** a seal (41) is positioned between the hub (36) and the support axis (16) or the ring (39) secured thereto.

9. Machine according to any one of Claims 1, 3, 4 or 5, ***characterized in* that** the upper disc (24) is fixed to a hub (42) which is mounted by means of at least one ball bearing (44) on a cylindrical interior part (45) of a box (46) which is fixed to the support axis (16).

10. Machine according to Claim 9, ***characterized in* that** a toothed wheel (50) for driving the casing (18) in rotation is fixed to the hub (42) and to the upper disc (24).

11. Machine according to Claim 9, ***characterized in* that** the side of the box (46) facing towards the upper disc (24) is closed off by means of a cover (52).
